# EUROPÄISCHE PATENTSCHRIFT

(11) **EP 0 714 794 B1**
(45) Veröffentlichungstag und Bekanntmachung des Hinweises auf die Patenterteilung: **22.08.2001**
(21) Anmeldenummer: 95118797.0
(22) Anmeldetag: 29.11.1995
(51) Int. Cl.: B60C 9/08, B60C 9/20, B60C 9/00

(54) **Gummierte Lage**
Rubberized layer
Nappe caoutchoutée

(30) Priorität: 02.12.1994 DE 4443017
(43) Veröffentlichungstag der Anmeldung: 05.06.1996
(73) Patentinhaber: Dunlop GmbH, 63450 Hanau (DE)
(72) Erfinder: Hamacher, Wilhelm, D-63486 Bruchköbel-Niederissigheim (DE)
(74) Vertreter: Manitz, Finsterwald & Partner

(56) Entgegenhaltungen:
- EP-A- 0 387 181
- EP-A- 0 604 807
- DE-A- 3 627 623
- FR-A- 1 495 730
- GB-A- 2 261 858

## Beschreibung

Die Erfindung betrifft eine gummierte Lage mit einer Vielzahl von nicht metallischen Zwirnen zur Verwendung im Reifenbau, insbesondere für Karkassen und / oder Gürtel, wobei die Zwirne, im Reifenbau auch als Korde bezeichnet, aus miteinander verdrillten Garnen bestehen, die ihrerseits aus Einzelfilamenten aufgebaut sein können, und wobei die Zugfestigkeit der Zwirne über die Dicke bzw. die auf eine bestimmte Länge bezogene Masse der verdrillten Garne und die dynamische Ermüdungstüchtigkeit über deren Verdrillungsgrad eingestellt werden.

Eine solche gettungsgemäße gummierte Lage ist aus dem Dokument GB-A-2 261 858 bekannt. Aus dieser Druckschrift ist außerdem bekannt, dem Verdrillungsgrad herkömmlicher Garne miteinander gegenüber dem herkömmlichen Verdrillungsgrad zu reduzieren. Dadurch sollen die Biegesteifigheit und die Zugfestigkeit so erhöht werden, daß Zwirndurchmesser, die Fadenzahl je Einheitsbreite der Lage und die Lagenzahl gegenüber herkommlichen Reifen reduziert werden können.

Die im Reifenbau insbesondere für die Karkasse und im Gürtel verwendeten gummierten Lagen aus nicht metallischen Korden bestehen üblicherweise aus einer Vielzahl von nebeneinander angeordneten Kunststoffkorden, zumeist aus Rayon, Nylon oder einer ähnlichen Textilfaser, wobei die Korde aus Garnen aufgebaut sind, deren Gesamtdicke pro Garn üblicherweise 1220 dtex, 1840 dtex und 2440 dtex beträgt, als übliche Maßeinheit für die Masse in Gramm pro 10.000 m.

Durch Verdrillung von mindestens zwei solcher Garne zu einem Zwirn oder in der Reifenfachsprache Kord erhält der Kord die erforderliche dynamische Ermüdungstüchtigkeit. Die in einer Lage nebeneinander angeordneten Korde werden mit Kautschukmaterial umhüllt, um eine bessere Verbindung mit den übrigen Reifenteilen zu bewirken. Hierbei ist zur Isolierung der Korde eine Mindeststärke des Kautschukmaterials erforderlich.

Es ist bei Fahrzeugreifen heute ein allgemeines Bestreben, das Reifengewicht soweit wie möglich zu reduzieren, vor allem um den Kraftstoffverbrauch des Fahrzeugs zu senken. Andererseits sind von modernen Fahrzeugreifen hohe physikalische Anforderungen, insbesondere in bezug auf dynamische Belastungen, zu erfüllen.

Es ist daher Aufgabe der Erfindung, eine gummierte Lage der eingangs genannten Art zur Verwendung im Reifenbau anzugeben, die eine Reduzierung des Reifengewichts ohne wesentliche Verschlechterung der physikalischen Eigenschaften des Fahrzeugreifens ermöglicht.

Diese Aufgabe wird erfindungsgemäß durch die Merkmale des Anspruch 1 gelöst.

Durch die reduzierte Dicke bzw. auf eine bestimmte Länge bezogene Masse der Garne ist das Gewicht der gummierten Lage bei gleicher Fachung der Garne im Zwirn bzw. Kord und bei gleicher Kordzahl pro Lage gegenüber bekannten Lagen deutlich reduziert. Zu dem reduzierten Eigengewicht der Korde kommt hinzu, daß aufgrund der geringeren Korddicke auch die Gummierungsschicht oberhalb und unterhalb der Textillage für die Isolierung und Verbindung mit den benachbarten Bauteilen entsprechend reduziert werden kann, so daß das Gewicht des Kautschukmaterials ebenfalls verringert ist. Durch diese Gewichtsreduzierung wird das Gesamtgewicht des Fahrzeugreifens - mit den eingangs genannten Vorteilen - reduziert.

Die bei gleicher Fachung der Garne im Zwirn bzw. Kord durch die verringerte Dicke der Garne konstruktiv bedingte geringere Festigkeit der Korde wird erfindungsgemäß durch Erniedrigung des Verdrillungsgrades bis unter das sich aus der geforderten Ermüdungstüchtigkeit ergebende Maß ausgeglichen, denn mit abnehmendem Verdrillungsgrad steigt die Festigkeit des Kordes. Überraschenderweise hat sich nämlich gezeigt, daß die Ermüdungstüchtigkeit der Korde trotz derart erniedrigtem Verdrillungsgrad bis zu einer bestimmten Mindestdicke des Garns nicht oder nur unwesentlich verschlechtert wird. Dies dürfte darauf zurückzuführen sein, daß die dünneren Garne von sich aus eine höhere Ermüdungstüchtigkeit aufweisen als die bisher verwendeten dickeren Garne.

Die Reduzierung der Dicke bzw. der auf eine bestimmte Länge bezogenen Masse sowie des Verdrillungsgrades der Garne führt zu einem völlig neuen Kordmaterial, denn der Verdrillungsgrad liegt unterhalb des Wertes, der bisher für zulässig und möglich gehalten wurde. Bei den bisher verwendeten Korden kann der Verdrillungsgrad zwar innerhalb bestimmter Grenzen schwanken. Dieser Bereich wird erfindungsgemäß aber verlassen und der untere Grenzwert deutlich unterschritten.

Die Dicke der Garne ist nach einer Ausgestaltung der Erfindung beispielsweise von 1840 dtex auf 1500 dtex reduziert, wobei die tatsächliche Dicke herstellungsbedingt um circa ± 50 dtex abweichen kann. Hierdurch wird eine Gewichtsreduzierung der gummierten Lage von circa 20 % gegenüber den bekannten Lagen erzielt.

Der Verdrillungsgrad von Korden aus zwei Garnen mit einer Dicke von 1500 dtex ist bevorzugt auf 300 bis 480 Drehungen pro Meter (T/m) erniedrigt gegenüber 380 bis 480 T/m bei Korden aus zwei Garnen mit 1840 dtex, und von Korden aus drei Garnen auf 300 bis 450 T/m gegenüber 350 bis 420 T/m. Die Reduzierung des Verdrillungsgrades ergibt sich dabei daraus, daß dieser vom Steigungswinkel der Garne im Zwirn abhängig ist und dieser wiederum von der Dicke der Garne, so daß dieselbe Drehungszahl pro Länge bei dickeren Garnen einen höheren Verdrillungsgrad bedeutet. Die genannten Korde sind vorteilhaft in Karkassen von Fahrzeugreifen als Ersatz für bekannte Korde einsetzbar, wo sie die beschriebene Gewichtsreduzierung bewirken.

Nach einer anderen Ausgestaltung der Erfindung ist der Verdrillungsgrad von Korden aus zwei Garnen mit 1500 dtex auf 150 bis 300 T/m reduziert gegenüber 350 T/m bei Korden aus zwei Garnen mit 1840 dtex, und bei Korden aus drei Garnen auf 200 bis 300 T/m gegenüber 250 T/m. Derartige Korde sind bevorzugt in Gürteln von Fahrzeugreifen einsetzbar und bewirken dort ebenfalls die beschriebene Gewichtsreduzierung gegenüber bekannten in Gürteln verwendeten Korden. Der Gürtel kann dabei vorteilhaft als Falt- oder als Schnittgürtel ausgebildet sein.

Nach einer weiteren Ausgestaltung der Erfindung wird die erfindungsgemäße gummierte Lage als Abdeckstreifen oder als Bandage verwendet, wobei die Bandage auch als Streifenbandage (JLB) ausgebildet sein kann. Der Verdrillungsgrad der Korde kann hierbei dem zuvor für die Verwendung im Gürtel genannten entsprechen.

Nach einer weiteren Ausgestaltung der Erfindung sind die Korde in einer Lage nebeneinander angeordnet und weisen eine über die Breite dieser Lage gemessene Dichte von circa 100 Korden pro 10 cm auf. Durch diese Ausgestaltung wird eine gummierte Lage geschaffen, welche dem Fahrzeugreifen die gewünschten physikalischen Eigenschaften verleiht.

Ein Ausführungsbeispiel der Erfindung ist in der Zeichnung dargestellt und wird nachfolgend beschrieben. Es zeigen in vereinfachter Darstellung:
- Figur 1: einen Querschnitt durch eine erfindungsgemäße gummierte Lage,
- Figur 2: einen aufgeschnittenen Fahrzeugreifen mit einer solchen gummierten Lage als Abdeckstreifen und als Streifenbandage,
- Figur 3: einen aufgeschnittenen Fahrzeugreifen mit einer solchen gummierten Lage als Schnittgürtel,
- Figur 4: einen aufgeschnittenen Fahrzeugreifen mit einer solchen gummierten Lage als C-Faltgürtel und
- Figur 5: einen aufgeschnittenen Fahrzeugreifen mit einer solchen gummierten Lage als Textilfaltgürtel.

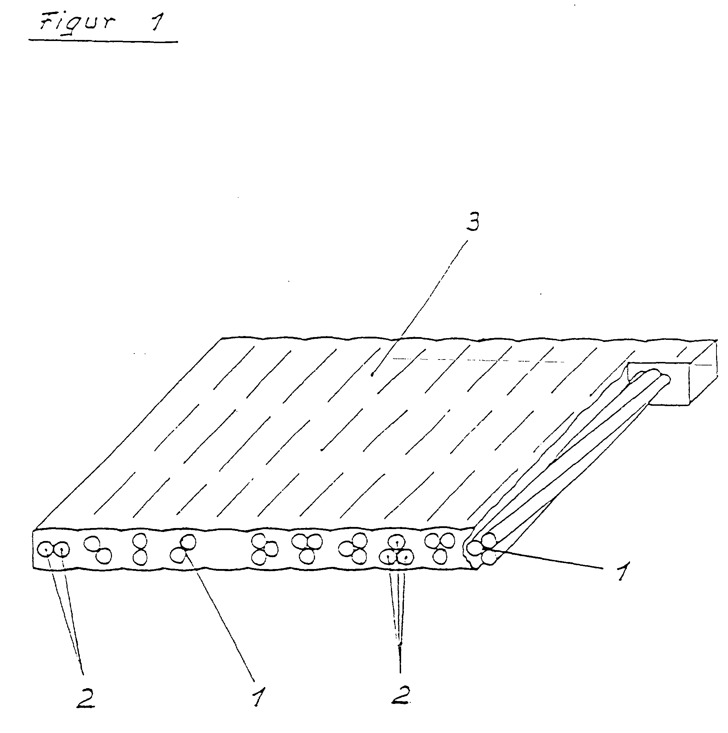

Bei der in Figur 1 dargestellten gummierten Lage ist eine Vielzahl von Zwirnen bzw. Korden 1, insbesondere circa 100 Korde pro 10 cm, nebeneinander angeordnet. Die Korde 1 sind bei dem dargestellten Beispiel in der Figur rechts aus drei und in der Figur links aus zwei Garnen 2 einer Textilfaser, beispielsweise Rayon, aufgebaut, wobei die Garne 2 untereinander zur Erhöhung der Ermüdungstüchtigkeit verdrillt sind.

Die Garne 2 weisen eine Dicke von 1500 dtex auf sowie einen Verdrillungsgrad von 300 bis 450 T/m, wenn die gummierte Lage für die Karkasse verwendet werden soll, bzw. einen Verdrillungsgrad von 200 bis 300 T/m, wenn die gummierte Lage im Gürtel oder als Abdeckstreifen bzw. Bandage verwendet werden soll.

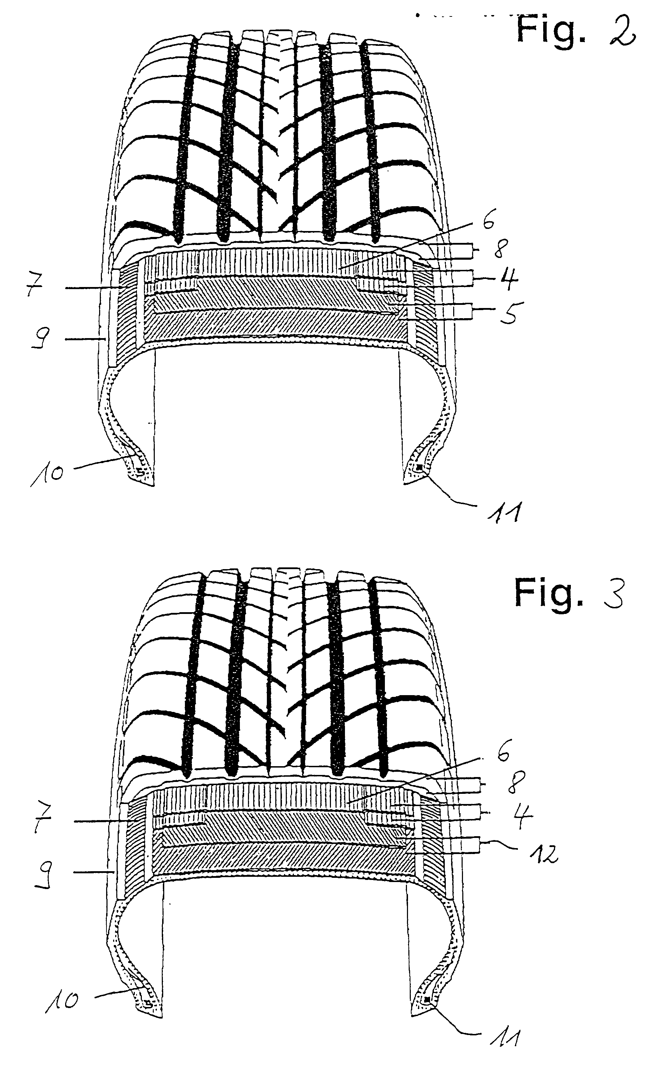

Die Korde 1 bzw. Garne 2 sind von einer Kautschukschicht 3 umhüllt, man spricht hierbei auch vom Kalandrieren. Diese Kautschukschicht verbessert die Verbindung zu den anderen Reifenteilen wie sie in Figur 2 dargestellt sind.

Figur 2 zeigt die erfindungsgemäße gummierte Lage zum einen als Abdeckstreifen 4 der beiden als Schnittgürtel ausgebildeten Stahlgürtellagen 5. Zum anderen ist die erfindungsgemäße gummierte Lage für die um die Stahlgürtellagen 5 gewickelte Streifenbandage 6 verwendet.

Durch die Kalandrierung der Garne der Abdeckstreifen 4 und der Streifenbandage 6 wird die Verbindung der gummierten Lagen untereinander und mit den übrigen Reifenteilen, nämlich Gürtellagen 5, Karakasse 7, Lauffläche 8, Reifenflanke 9 mit Wulst 10 und Wulstkern 11, verbessert.

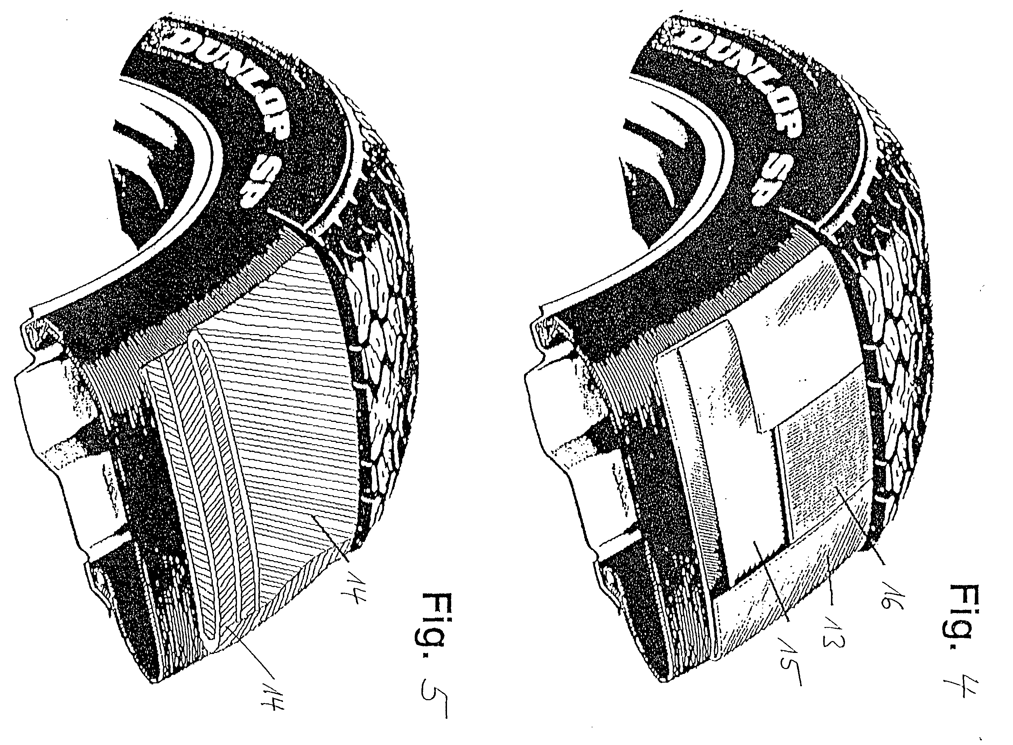

Figur 3 zeigt die Verwendung der erfindungsgemäßen gummierten Lage als Schnittgürtel 12, Figur 4 als C-Faltgürtel 13 und Figur 5 als Textil-Faltgürtel 14. In Figur 4 ist neben dem C-Faltgürtel zusätzlich ein Schnittgürtel 15 vorhanden, der ebenfalls erfindungsgemäß aufgebaut sein kann. Zwischen den beiden einander gegenüberliegenden Kanten des C-Faltgürtels 13 in Figur 4 ist zudem ein Zwischenstreifen 16 vorgesehen.

Wie Figur 5 zeigt, können bevorzugt zwei Textilfaltgürtel radial übereinander vorhanden sein, deren Faltkanten auf entgegengesetzten Seiten des Reifens liegen.

Die Zwirne bzw. Korde 2 der erfindungsgemäßen gummierten Lage bilden bei Verwendung als Gürtellage mit der Reifenumfangsrichtung bevorzugt einen Winkel zwischen circa 18° und circa 30°. Bei mehreren radial übereinander angeordneten gummierten Lagen ist die Ausrichtung der Korde benachbarter Lagen bevorzugt entgegengesetzt.

In jedem Falle wird durch die Verwendung der erfinungsgemäßen gummierten Lagen ein Fahrzeugreifen mit geringem Gewicht und guten physikalischen Eigenschaften erhalten.

### Bezugszeichenliste

- 1: Zwirn bzw. Kord
- 2: Garn
- 3: Kautschukschicht
- 4: Abdeckstreifen
- 5: Gürtellage
- 6: Streifenbandage
- 7: Karkasse
- 8: Lauffläche
- 9: Reifenflanke
- 10: Reifenwulst
- 11: Wulstkern
- 12: Schnittgürtel
- 13: C-Faltgürtel
- 14: Textilfaltgürtel
- 15: Schnittgürtel
- 16: Zwischenstreifen

## Patentansprüche

1. Gummierte Lage mit einer Vielzahl von nicht metallischen Zwirnen (1) zur Verwendung im Reifenbau, bei welcher die Zwirne (1) aus miteinander verdrillten Garnen (2) bestehen, wobei die Zugfestigkeit der Zwirne (1) von der Dicke bzw. der auf eine bestimmte Länge bezogenen Masse der verdrillten Garne (2) und die dynamische Ermüdungstüchtigkeit von deren Verdrillungsgrad, also von der Anzahl der Drehungen der Garne umeinander pro Längeneinheit, abhängig sind,
**dadurch gekennzeichnet**,
daß die Dicke bzw. die Masse der Garne (2) ,unter Zulassung auch außerhalb der handelsüblichen Garnklassen liegender Dicken bzw. Massen, kleiner ist als die Dicke bzw. Masse, die sich aus der für den jeweiligen Einsatzzweck geforderten Zugfestigkeit ergibt, und daß der Verdrillungsgrad dieser Garne (2), also der Garne mit der kleineren Dicke bzw. Masse, umeinander niedriger ist als der Verdrillungsgrad, der sich aus der für den jeweiligen Einsatzzweck erforderlichen Ermüdungstüchtigkeit für ein Garn ergäbe, das eine der geforderten Zugfestigkeit entsprechende Dicke bzw. Masse aufweist, wobei der Verdrillungsgrad um soviel niedriger ist, daß die Festigkeitseinbuße der Garne (2) aufgrund ihrer verringerten Dicke bzw. Masse durch den verringerten Verdrillungsgrad ausgeglichen wird, ohne daß die Ermüdungstüchtigkeit des Garnes mit der kleineren Dicke bzw. Masse über das tolerierbare Maß hinaus abnimmt.

2. Gummierte Lage nach Anspruch 1,
**dadurch gekennzeichnet**,
daß die Dicke der Garne (2) von 1840 dtex, das heißt Gramm pro 10.000 Meter, auf 1500 dtex reduziert ist.

3. Gummierte Lage nach Anspruch 2,
**dadurch gekennzeichnet**,
daß der Verdrillungsgrad von Zwirnen (1) aus zwei Garnen (2) mit 1500 dtex auf circa 300 bis 480 Drehungen pro Meter (T/m) erniedrigt ist, gegenüber 380 bis 480 T/m bei Zwirnen aus zwei Garnen mit 1840 dtex, und von Zwirnen (1) aus drei Garnen (2) mit 1500 dtex auf circa 300 bis 450 T/m, gegenüber 350 bis 420 T/m bei Zwirnen aus drei Garnen mit 1840 dtex.

4. Gummierte Lage nach Anspruch 2,
**dadurch gekennzeichnet**,
daß der Verdrillungsgrad von Zwirnen (1) aus zwei Garnen (2) mit 1500 dtex auf circa 150 bis 300 T/m erniedrigt ist, gegenüber 350 T/m bei Zwirnen aus zwei Garnen mit 1840 dtex, und von Zwirnen (1) aus drei Garnen (2) mit 1500 dtex auf ca. 200 bis 300 T/m, gegenüber 250 T/m bei Zwirnen aus drei Garnen mit 1840 dtex.

5. Gummierte Lage nach einem der vorhergehenden Ansprüche,
**dadurch gekennzeichnet**,
daß die Zwirne (1) in einer Lage nebeneinander angeordnet sind und eine über die Breite dieser Lage gemessene Dichte von circa 100 Zwirnen pro 10 cm aufweisen.

6. Gummierte Lage nach einem der vorhergehenden Ansprüche,
**dadurch gekennzeichnet**,
daß die gummierte Lage als Abdeckstreifen (4, 5) und / oder Bandage (6), auch Streifenbandage (JLB) verwendet wird.

7. Gummierte Lage nach einem der vorhergehenden Ansprüche,
**dadurch gekennzeichnet**,
daß die gummierte Lage als Schnittgürtel (12) verwendet wird.

8. Gummierte Lage nach einem der vorhergehenden Ansprüche,
**dadurch gekennzeichnet**,
daß die gummierte Lage als C-Faltgürtel (13) oder als Textilfaltgürtel (14) verwendet wird.

9. Gummierte Lage nach einem der vorhergehenden Ansprüche,
**dadurch gekennzeichnet**,
daß die Zwirne mit der Reifenumfangrichtung einen Winkel zwischen circa 18° und circa 30° einschließen.

## Claims

1. A rubberised ply having a plurality of non-metallic twines (1) for use in tyre construction, wherein the twines (1) consist of yarns (2) twisted together, with the tensile strength of the twines (1) depending on the thickness or the mass related to a certain length of the twisted yarns (2) and the dynamic fatigue resistance depending on their degree of twisting, that is on the number of turns of the yarns around one another per unit of length, characterised in that the thickness or the mass of the yarns (2) is smaller than the thickness or mass which results from the tensile strength required for the respective application, with thicknesses or masses being permitted which are outside the commercial yarn classes; and in that the degree of twisting of these yarns (2) around one another, that is the degree of twisting of the yarns with the smaller thickness or mass, is lower than the degree of twisting which would result from the fatigue resistance required for the respective application for a yarn which has a thickness or mass corresponding to the required tensile strength, with the degree of twisting being so much lower that the strength loss of the yarns (2) is compensated as a result of their reduced thickness or mass by the reduced degree of twisting without the fatigue resistance of the yarn having the smaller thickness or mass being reduced beyond a tolerable degree.

2. A rubberised ply in accordance with claim 1, characterised in that the thickness of the yarns (2) is reduced from 1,840 dtex, that is grams per 10,000 metres, to 1,500 dtex.

3. A rubberised ply in accordance with claim 2, characterised in that the degree of twisting of twines (1) of two yarns (2) having 1,500 dtex is reduced to approximately 300 to 480 turns per metre (T/m), in comparison with 380 to 480 T/m in twines of two yarns having 1,840 dtex, and the degree of twisting of twines (1) of three yarns (2) having 1,500 dtex is reduced to approximately 300 to 450 T/m, in comparison with 350 to 420 T/m in twines of three yarns having 1,840 dtex.

4. A rubberised ply in accordance with claim 2, characterised in that the degree of twisting of twines (1) of two yarns (2) having 1,500 dtex is reduced to approximately 150 to 300 T/m, in comparison with 350 T/m in twines of two yarns having 1,840 dtex, and the degree of twisting of twines (1) of three yarns (2) having 1,500 dtex is reduced to approximately 200 to 300 T/m, in comparison with 250 T/m in twines of three yarns having 1,840 dtex.

5. A rubberised ply in accordance with any one of the preceding claims, characterised in that the twines (1) are arranged in one ply next to one another and have a density measured over the width of this ply of approximately 100 twines per 10 cm.

6. A rubberised ply in accordance with any one of the preceding claims, characterised in that the rubberised ply is used as a cover strip (4, 5) and/or bandage (6), also strip bandage (JLB).

7. A rubberised ply in accordance with any one of the preceding claims, characterised in that the rubberised ply is used as a cut belt (12).

8. A rubberised ply in accordance with any one of the preceding claims, characterised in that the rubberised ply is used as a C fold belt (13) or as a textile fold belt (14).

9. A rubberised ply in accordance with any one of the preceding claims, characterised in that the twines form an angle of between approximately 18° and approximately 30° with the circumferential direction of the tyre.

## Revendications

1. Nappe caoutchoutée avec une pluralité de fils retordus non métalliques (1) pour utilisation dans la fabrication de pneus, dans laquelle les fils retordus (1) se composent de fils (2) torsadés ensemble, la résistance à la traction des fils retordus (1) dépendant de l'épaisseur ou de la masse, par rapport à une certaine longueur, des fils (2) torsadés et l'aptitude dynamique à la fatigue dépendant du degré de torsion de ceux-ci, donc du nombre de tours des fils l'un autour de l'autre par unité de longueur,
caractérisée en ce que
l'épaisseur ou la masse des fils (2), en admettant également des épaisseurs ou masses se situant en dehors des classes de fil habituellement commercialisées, est inférieure à l'épaisseur ou la masse qui résulte de la résistance à la traction exigée pour l'usage respectif, et en ce que le degré de torsion de ces fils (2), donc des fils d'épaisseur ou masse inférieure, l'un autour de l'autre, est inférieur au degré de torsion qui résulterait de l'aptitude à la fatigue nécessaire pour l'usage respectif pour un fil présentant une épaisseur ou masse correspondant à la résistance à la traction exigée, le degré de torsion étant inférieur d'une valeur telle que la perte en résistance des fils (2) en raison de leur épaisseur ou masse réduite soit compensée par le degré de torsion réduit sans que l'aptitude à la fatigue du fil d'épaisseur ou masse inférieure ne diminue au-delà de la mesure tolérable.

2. Nappe caoutchoutée selon la revendication 1,
caractérisée en ce que l'épaisseur des fils (2) est réduite de 1840 dtex, c'est-à-dire gramme par 10 000 mètres, à 1500 dtex.

3. Nappe caoutchoutée selon la revendication 2,
caractérisée en ce que le degré de torsion de fils retordus (1) composés de deux fils (2) de 1500 dtex est réduit à environ 300 à 480 tours par mètre (T/m), en regard de 380 à 480 T/m pour des fils retordus composés de deux fils de 1840 dtex, et celui de fils retordus (1) composés de trois fils (2) de 1500 dtex est réduit à environ 300 à 450 T/m, en regard de 350 à 420 T/m pour des fils retordus composés de trois fils de 1840 dtex.

4. Nappe caoutchoutée selon la revendication 2,
caractérisée en ce que le degré de torsion de fils retordus (1) composés de deux fils (2) de 1500 dtex est réduit à environ 150 à 300 T/m, par rapport à 350 T/m pour des fils retordus composés de deux fils de 1840 dtex, et celui de fils retordus (1) composés de trois fils (2) de 1500 dtex est réduit à environ 200 à 300 T/m, en regard de 250 T/m pour des fils retordus composés de trois fils de 1840 dtex.

5. Nappe caoutchoutée selon l'une quelconque des revendications précédentes, caractérisée en ce que les fils retordus (1) sont disposés côte à côte dans une nappe et présentent une densité d'environ 100 fils retordus par 10 cm mesurée sur la largeur de cette nappe.

6. Nappe caoutchoutée selon l'une quelconque des revendications précédentes, caractérisée en ce que la nappe caoutchoutée est utilisée comme bande de recouvrement (4, 5) et/ou bandage (6), également comme bandage strié (JLB).

7. Nappe caoutchoutée selon l'une quelconque des revendications précédentes, caractérisée en ce que la nappe caoutchoutée est utilisée comme ceinture de coupe (12).

8. Nappe caoutchoutée selon l'une quelconque des revendications précédentes, caractérisée en ce que la nappe caoutchoutée est utilisée comme ceinture pliée en C (13) ou comme ceinture pliée textile (14).

9. Nappe caoutchoutée selon l'une quelconque des revendications précédentes, caractérisée en ce que les fils retordus forment avec la direction circonférentielle du pneu un angle situé entre environ 18° et environ 30°.
